# EUROPEAN PATENT APPLICATION

(11) **EP 2 586 686 A1**
(43) Date of publication of application: **01.05.2013**
(21) Application number: 11187242.0
(22) Date of filing: 31.10.2011
(51) Int. Cl.: B62J 9/00, B62M 7/12, B62M 6/40, B62M 6/90, B62M 6/85, B60K 1/02

(54) **Motorized vehicle**

(30) Priority: 28.10.2011 IT GE20110124
(71) Applicant: Wayel S.r.l., 40132 Bologna (IT)
(72) Inventor: Giatti, Giorgio, I-40068 San Lazzaro di Savena (BO) (IT)
(74) Representative: Karaghiosoff, Giorgio Alessandro

(57) **Abstract**

Motorized vehicle with at least two wheels (50, 51), provided with at least a first motor (10) and at least a second motor (11), said first motor (10) being intended for applying torque values higher than those applicable by said second motor (11), and said second motor (11) being intended for reaching speeds higher than those reachable by said first motor (10), there being provided sensor means (100, 110) for the operating condition of each motor (10, 11) and means (3) for controlling the starting of each motor (10, 11), which control means (3) start said first motor (10) and/or said second motor (11) on the bais of the parameters detected by said sensor means (100, 110) such to achieve a predetermined acceleration and/or speed.

## Description

The present invention relates to a motorized vehicle with at least two wheels.

Nowadays the mobility problem, particularly the urban mobility, imposes the use of motorized vehicles that have to be as inexpensive, silent, non-polluting as possible.

A currently known class of vehicles aiming at satisfying the above mentioned requirements are the electric motor scooters, deriving from internal combustion engine motor scooters, merely by replacing the type of motorization. To this end their drawback is to have such a structural complexity and so such a weight requiring a great power supplied by the electric motor. At the same time the required performances are similar to those of an internal combustion engine motor scooter and therefore they are provided with very powerful motors that need a considerable power supply, with the consequence of requiring very heavy batteries that guarantee a very limited range.

Moreover, unlike refueling, electric energy supply for charging the electric vehicles is not currently available on the territory, and the current electric motor scooters need a recharging phase in a garage or the like, since the batteries are not removable.

Generally motorized vehicles are further provided with a mechanical gear box in order to change the power supplied by the motor independently of the motor revolutions, which comprises means for varying the gear ratio which are inserted into the transmission system.

The need of a mechanical gear box adds complexity and consequently manufacturing and maintenance costs to the currently known vehicles.

A further type of vehicles used for the urban mobility are pedal-assisted bicycles, namely bicycles with a motor propulsion added to the human propulsion. Although these are vehicles useful in a urban environment, the pedal-assisted bicycles have the drawback of requiring anyway a propulsion action on the pedals by the user and a desired speed can be set only by acting on the pedals. For instance in the European Union pedal-assisted bicycles have to provide a motor power supply which is progressively reduced and then cut off when a speed of 25 km/h is reached, or a motor power supply which is cut off before 25 km/h if the user stops pedaling.

The present invention aims to overcome the above mentioned drawbacks of the prior art with a motorized vehicle with at least two wheels, which is further provided with at least a first motor and at least a second motor, said first motor being intended for applying torque values higher than those applicable by said second motor, and said second motor being intended for reaching speeds higher than those reachable by said first motor, there being provided sensor means for the operating condition of each motor and means for controlling the starting of each motor, which control means start said first motor and/or said second motor on the basis of the parameters detected by said sensor means such to achieve a predetermined acceleration and/or speed.

The acceleration and/or speed are therefore obtained by using alternatively or in combination at least two motors, each one with different performances, thus eliminating the need of a mechanical gear box.

According to one embodiment said first motor and said second motor are each one inserted in the hub of one of the wheels.

Thus the need for means transmitting the motion from the motor to the wheels is further eliminated, with a further saving as regards manufacturing.

According to a further embodiment there are provided two wheels, one front wheel and a rear wheel with respect to the forward direction, the rear wheel being driven by said first motor and the front wheel being driven by said second motor.

According to such embodiment the vehicle of the present invention is a motorcycle with a double motorization, such that the rear wheel is driven by a motor whose characteristics are oriented to a greater extent to the applied torque while the front wheel is driven by a motor whose characteristics are oriented to a greater extent to the reachable speed.

However it is possible as an alternative to provide vehicles with three or more wheels comprising the same technical characteristics described above and specified below.

According to a further embodiment, in a first phase of the movement of the vehicle, said control means start only said first motor, and in a second movement phase they start only said second motor.

Thus the initial phase of the vehicle movement, that needs a higher thrust, is carried out by the first motor, while later the second motor is driven in order to develop a higher speed.

In a further embodiment, between said first phase and said second phase there is provided an intermediate phase of the vehicle movement wherein said control means contemporaneously start said first motor and said second motor.

The provision of an intermediate phase wherein both the motors are contemporaneously started allows the lack of drive to be avoided even for a very short time, since it could be perceived by the user, with an unpleasant driving sensation.

According to one embodiment said first motor and/or said second motor are electric motors.

For instance it is possible to use motors that are currently known and used in pedal-assisted bicycles.

In a further embodiment there are provided one or more rechargeable batteries for supplying at least one of said electric motors.

According to a further embodiment at least one battery is of the lithium-polymer type.

The lithium-polymer batteries have the great advantage of having a moderate weight and of having optimal performances if used for supplying motors with a moderate instantaneous absorption.

According to a further embodiment there is provided a first battery mounted in such a manner that it is not intended to be quickly removed, and one or more further removable batteries.

It is possible to provide for example one or more removable batteries, depending on the choice of the user, that can be removed and individually recharged, without the need of an outlet near the vehicle.

In a further embodiment said one or more removable batteries are placed at the barycenter of the vehicle.

This guarantees the stability of the vehicle to be optimized, since the batteries are among the heaviest elements of the vehicle.

According to an improvement said first battery is connected to a solar cell in order to be recharged.

Thus the first battery can be used as a backup, since it is continuously charged when the vehicle is exposed to the sun light. In one embodiment there is provided a helmet top box, said solar cell being provided and integrated on the top cover of said helmet top box.

In one embodiment the first battery is placed inside the helmet top box.

According to a further embodiment between said solar cell and said top cover of said helmet top box there are provided air passage channels.

Thus a passive cooling of the solar cell is guaranteed, increasing the efficiency thereof.

In a further embodiment said removable batteries are housed into a battery holding compartment, which compartment has an openable side wall, the lower side of said side wall being hinged to the lower wall of said compartment and said side wall being movable from a closed condition to an open condition, in which open condition the top side of said side wall is spaced from the top wall of the compartment such that said one or more removable batteries can be fitted from the above.

In a further embodiment the inner side of said openable side wall is provided with one or more slides intended to guide the one or more removable batteries when are fitted or removed.

In a further embodiment the inner side of the lower wall of said compartment is provided with electric contact means intended to engage corresponding electric contact means provided on said one or more removable batteries, said electric contact elements being placed in such a manner that when fitting said one or more removable batteries by means of said slides the electric contact elements of said batteries and the corresponding electric contact elements of said compartment are aligned one with the other, and the mutual engagement is facilitated by the weight of said one or more removable batteries.

According to a further embodiment said control means can be set by the user such to power said first motor and/or said second motor only with said first battery and with a maximum speed equal to a value ranging from 50% to 75%, particularly equal to 60%, of the maximum speed reachable by said second motor.

In this mode, the motors have lower performances, such to optimize the life of the first battery. This mode has the considerable advantage of allowing a completely solar-powered mobility, namely it obtains all the necessary energy from the sun and it does not require any type of recharging from an external electric mains.

In a further embodiment said control means can be set by the user such that said first motor and said second motor are contemporaneously started.

By this mode the possibility of starting both the motors in a particular situation requiring more power, such as a climb or the like, is guaranteed to the user.

According to a further embodiment it is possible to increase the maximum reachable speed by replacing said second motor with a third motor with a maximum reachable speed greater than the maximum speed reachable by said second motor, and by replacing the one or more removable batteries with one or more further removable batteries with a voltage corresponding to the operating voltage of said third motor.

According to a further embodiment there are provided two removable batteries and there are provided means detecting the charge condition of the battery in operation, such that the control means automatically pass the power supply from the battery in operation to the further battery, when the detected charge of the battery in operation decreases under a predetermined threshold.

In a further embodiment there are provided indicators for the charge condition of each individual battery.

These and other characteristics and advantages of the present invention will be more clear from the following description of some embodiments shown in the annexed drawings, wherein:
fig.1 is a general structural diagram of the invention;
fig.2 is a more detailed diagram;
figs. 3, 4 and 5 are different views of one embodiment;
fig.6 is a detail of the helmet top box and of the solar cell.

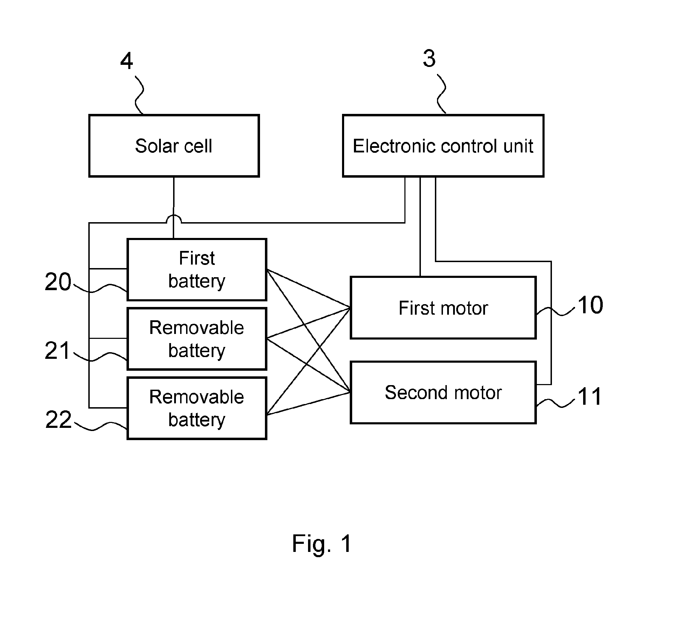

Figure 1 shows a general structural diagram of a motorized vehicle with at least two wheels, provided with at least a first motor 10 and at least a second motor 11, preferably electric motors.

The first motor 10 has characteristics oriented to a greater extent to the torque, that is it is intended to apply torque values higher than those applicable by the second motor 11, and the second motor 11 has characteristics oriented to a greater extent to the speed, that is it is intended to reach speeds higher than those reachable by the first motor 10.

The first motor 10 and the second motor 11 have an operating voltage preferably of 25,9 V.

Sensor means for the operating condition of each motor and means for controlling the starting of each motor, are provided, particularly an electronic control unit 3, which electronic control unit 3 starts the first motor 10 and/or the second motor 11 on the basis of the parameters detected by the sensor means such to obtain a specific acceleration and/or speed.

Moreover one or more rechargeable batteries are provided for supplying at least one of said electric motors, particularly for supplying the first motor 10 and the second motor 11 in combination or alternatively.

There is provided a first battery 20 mounted in such a manner that it is not intended for being quickly removed, and one or more further removable batteries, particularly two removable batteries 21 and 22.

The choice between installing a single removable battery or two removable batteries can be given to the user on the basis of the desired range.

The removable batteries 21, 22 can be removed by the user and can be individually recharged by any outlet, without therefore requiring necessarily an outlet near the vehicle.

A solar cell 4 is further provided, to which the first battery 20 is connected for being recharged. The first battery 20 can be used as a backup, it being continuously recharged when the vehicle is exposed to the sun light.

The batteries 20, 21, 22 can be of any rechargeable type, preferably of the lithium-polymer type.

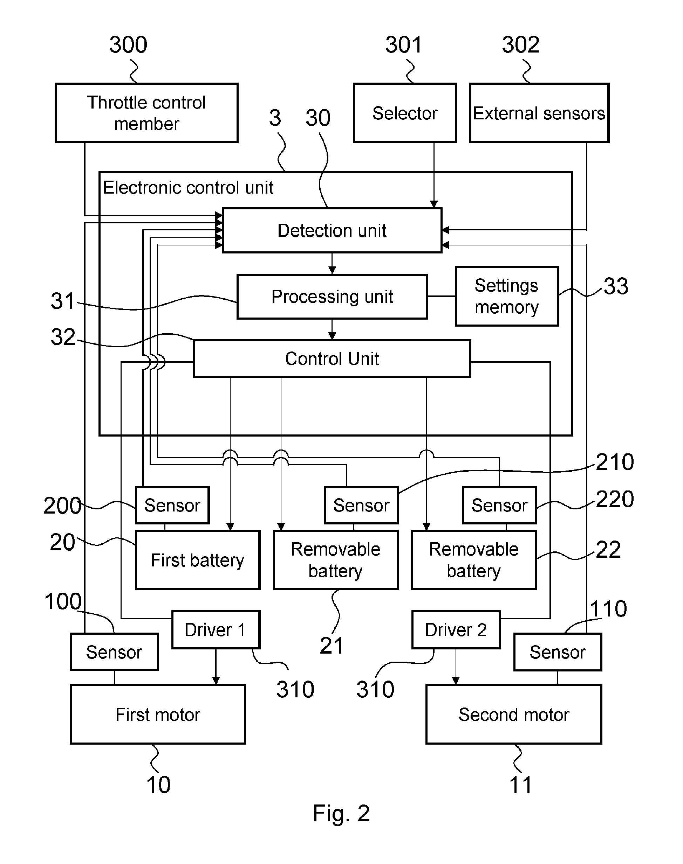

As it can be seen in figure 2 the electronic control unit 3 receives as inputs several setting signals from the user, from the sensor means for the operating condition of the motors and from possible external sensor means.

The sensor means for the operating condition of each motor comprise a first sensor 100 for detecting the operating condition of the first motor 10 and a second sensor 110 for detecting the operating condition of the second motor 11.

The parameters detected by the sensors 100 and 110 can be for example the speed and the absorption of each motor.

The user can operate a throttle control member 300 movable for a specific range between two extreme positions, which throttle control member 300 generates a signal corresponding to the movement thereof.

It is also possible to provide external sensors 302 that give information about the movement condition of the vehicle, such as for example an inclinometer, a wind sensor or the like.

Said signals are gathered as inputs to the electronic control unit 3 from a detection unit 30, there being also provided a processing unit 31 wherein signals are transformed and used in algorithms in order to establish on a moment-by-moment basis the power to be supplied to the first motor 10 and/or to the second motor 11.

Therefore a control unit 32 outputs the signals starting the motors, particularly to two drivers 310 and 311, that are arranged for managing the power supply of the first motor 10 and of the second motor 11 from the batteries 20, 21 or 22, respectively.

In a first phase of the vehicle movement, wherein a greater thrust is required, the electronic control unit 3 starts only the first motor 10; then there is provided an intermediate phase wherein the electronic control unit 3 starts contemporaneously both the motors; finally in a second movement phase, wherein a greater speed is required, the electronic control unit 3 starts only the second motor 11.

The electronic control unit 3 manages also which battery has to be intended for supplying the motors.

Indeed, means detecting the charge condition of the battery in operation are provided, which comprise a sensor 200 for the first battery 20, a sensor 210 for the removable battery 21 and a sensor 220 for the removable battery 22.

Sensors 200, 210 and 220 send a signal about the charge condition of the batteries 20, 21 and 22 to the detection unit 30, such that the electronic control unit 3 automatically passes the power supply from the battery in operation to the further battery, when the detected charge of the battery in operation goes under a specific threshold. Particularly upon the starting the electronic control unit 3 detects which are the removable batteries 21, 22 that are inserted, detects the charge condition of each removable battery 21, 22, begins to supply the motors with a charged battery and then there is the automatic passage of the power supply from the removable battery 22 to the removable battery 21 or vice versa, when the battery in operation is evaluated as not being sufficiently charged.

The passage of the power supply from a removable battery 21 or 22 to the first battery 20 can take place automatically, or advantageously, can be set by the user by means of a selector 301, which user therefore knows the fact that he/she is in a backup power supply condition.

The electronic control unit 3 further manages the starting of the motors 10, 11 in combination or alternatively on the basis of the charge condition of the battery in operation, optimizing the delivered power and the consumed power.

Moreover there is provided a unit 33 storing the predetermined settings, which can be loaded by the processing unit 31 by a command of the user through the selector 301, and which correspond to different movement modes of the vehicle.

The predetermined settings can be defined in such a way for example to change the power supplied by the motors on the basis of the required range.

According to a predetermined setting, called "eco mode", which is mainly range-oriented and completely solar-powered, the electronic control unit 3 can be set by the user through the selector 301 such to supply the first motor 10 and/or the second motor 11 only with the first battery 20 and with a maximum speed equal to a value ranging from 50% to 75%, particularly equal to 60%, of the maximum speed reachable by the second motor 11.

According to a further predetermined setting called "booster mode" the electronic control unit 3 can be set by the user by means of the selector 301 such that the first motor and said second motor are contemporaneously started.

The electronic control unit 3 further manages irregularity conditions and it generates error messages for the service activity.

It is advantageously composed of miniaturized electronic components, particularly by the SMD technology (Surface Mount Device).

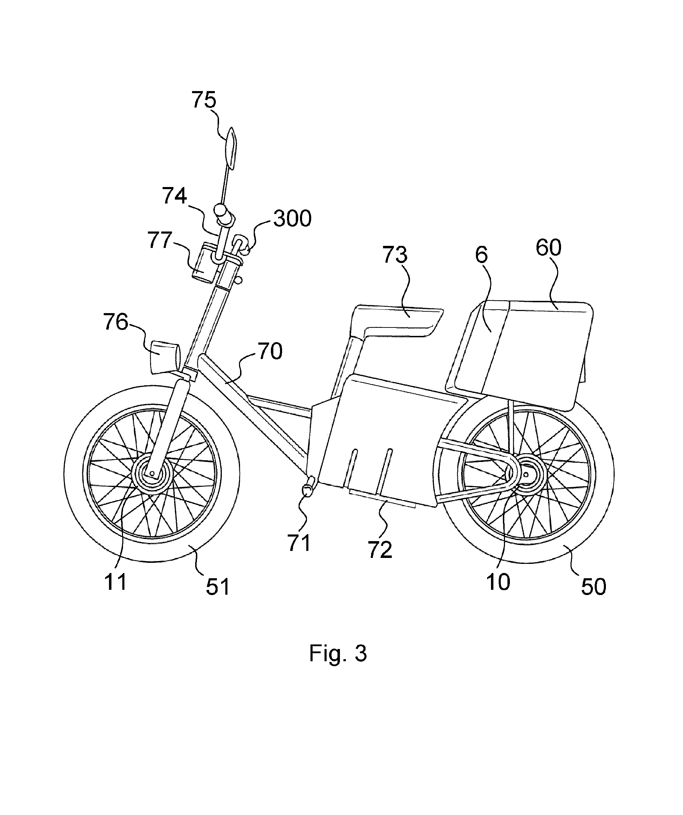

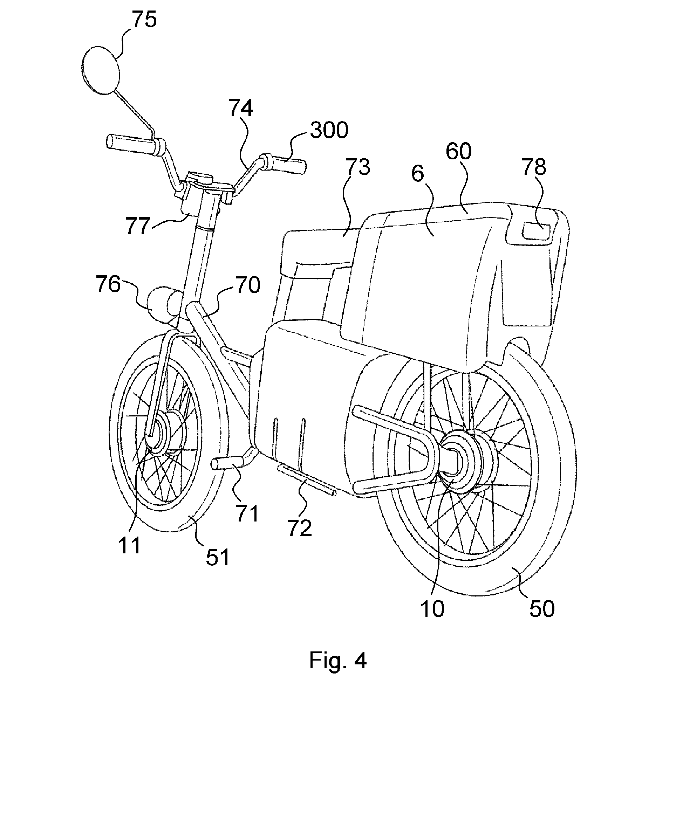

Figures 3, 4 and 5 show different views of a preferred embodiment of the vehicle of the present invention, composed of a motorbike with two wheels, of which a front wheel 51 and a rear wheel 50 with respect to the forward direction, with a double motorization, such that the rear wheel 50 is driven by a first motor 10 whose characteristics are oriented to a greater extent to the applied torque while the front wheel 51 is driven by a second motor 11 whose characteristics are oriented to a greater extent to the reachable speed.

Advantageously the first motor 10 and the second motor 11 are inserted in the hub of the rear wheel 50 and of the front wheel 51 respectively and can be of type currently known and used in pedal-assisted bicycles.

There are preferably provided 17 inch wheels, for a better compromise between comfort, safety and handling.

The vehicle comprises a frame 70, preferably a metal tubular one, a handlebar 74 for controlling the forward direction, a knob-like throttle control member 300, a saddle 73, two footrest plates 71 and the helmet top box 6 on whose cover the solar cell 4 is provided.

In a preferred embodiment the frame 70 is composed of T6 heat-treated 6061 aluminium.

It is possible to provide additional elements such as a front headlamp 76, a rear headlamp 79, a speedometer and/or odometer 77, a rear-vision mirror 75, a side stand 72, an electric horn system, disk brakes on both the wheels.

The electric horn system, the lamp system and the speedometer/odometer are managed by the electronic control unit 3.

The removable batteries 21 and 22 are placed in a battery holding compartment 2, suitably sized and placed at the barycenter of the vehicle, that is under the saddle 73.

The first battery 20 is housed in a semi-permanent manner inside the helmet top box 6.

In the example in the figure the first battery has a maximum charge of 8.5 Ah and a voltage of 25,9 V and a weight of about 2,5 Kg.

In the "eco mode" described above, the amount of energy that can be picked from the sun during a day by the solar cell 4 in the summer period is able to charge the first battery 20 such to guarantee a range of the vehicle of about 5-6 Km, allowing the users requiring a short-distance urban mobility to be free from any external energy supply.

The removable batteries 21 and 22 have a maximum charge of 24 Ah and voltage of 25,9 V and a weight of about 5 kg each one, thus being very comfortable for being removed and transported by the user.

The removable batteries 21 and 22 can guarantee a range of about 60 Km each one, and the fact that they are divided into two individual units allows the user to select whether using a single battery or both the batteries depending on the required range, namely about 60 Km or about 120 Km.

The motors have moderate powers, for example 250W, such to optimize the range and the performance of the lithium-polymer rechargeable batteries, guaranteeing a maximum speed of about 25 km/h.

There are also provided indicators of the charge condition of each battery, for example led light indicator or the like, that can be provided near the handlebar 74 or near the battery holding compartment 2, and that allow the user to evaluate the total charge level of the batteries and to decide which removable battery is to be removed for being recharged.

The selector 301 comprises control means such as buttons or the like, that can be provided near the handlebar 74.

Advantageously, for the "booster mode" there is provided a button that has to be kept pushed for all the required time for driving both the motors.

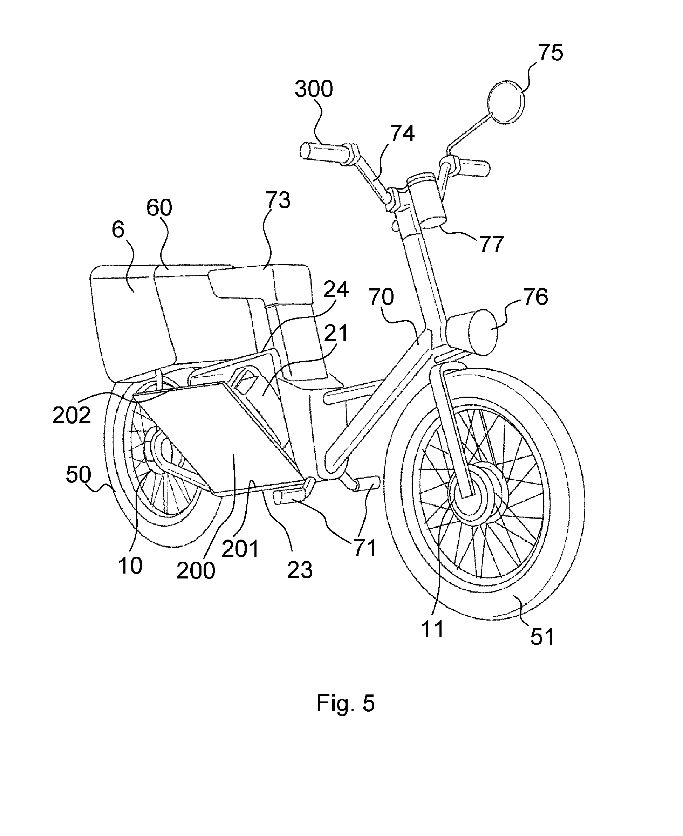

As it can be seen in figure 5 the battery holding compartment 2 has an openable side wall 200, the bottom side 201 of the side wall 200 being hinged to the bottom wall 23 of the compartment 2 and the side wall 200 being movable from a closed condition to an open condition.

In the open condition the top side 202 of the side wall 200 is spaced from the top wall 24 of the compartment 2 to such an extent that the removable batteries 21 and 22 can be fitted from the above.

The inner side of the openable side wall 200 is provided with one or more slides intended to guide the removable batteries 21 and 22 when are fitted or removed.

The inner side of the bottom wall 23 of said compartment 2 is provided with electric contact elements intended to engage corresponding electric contact elements provided on the removable batteries 21 and 22, the electric contact elements being placed such that upon the insertion of the removable batteries 21 and 22 by means of the slides the electric contact elements of the batteries 21 and 22 and the corresponding electric contact elements of the compartment 2 are aligned one with the other, and the mutual engagement is facilitated by the weight of the removable batteries 21 and 22.

It is possible to increase the maximum reachable speed by replacing the second motor 11 with a third motor with a maximum reachable speed greater than the maximum reachable speed of the second motor 11, and by replacing the removable batteries 21 and 22 with one or more further removable batteries with a voltage corresponding to the operating voltage of the third motor.

Particularly by replacing the second 25,9 V motor 11 with a third 36 V motor, and correspondingly by replacing the removable 25,9 V batteries 21 and 22 with removable 37 V batteries, it is possible to guarantee a maximm speed of 35 km/h.

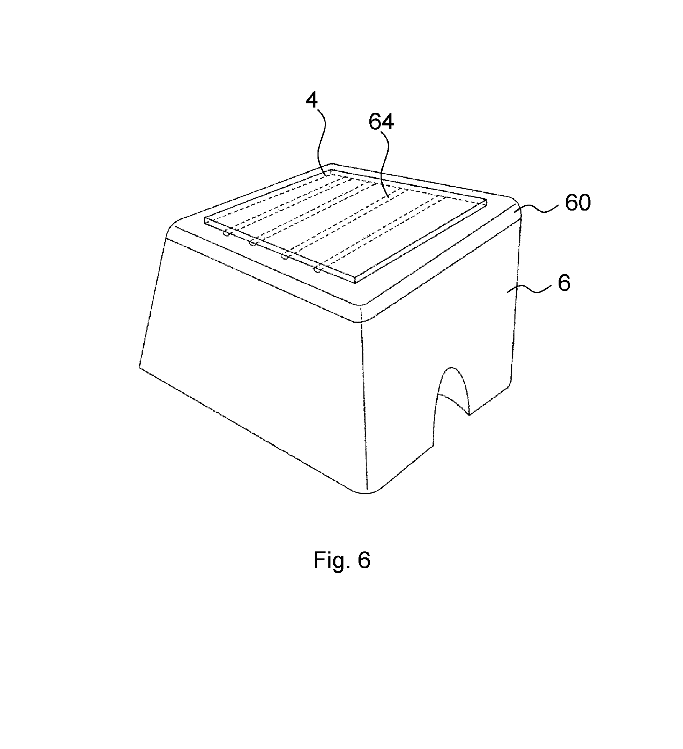

Figure 6 shows a detailed view of the helmet top box 6, which comprises a top cover 60.

On the top cover 60 the solar cell 4 electrically connected to the first battery 20 is secured, preferably recessed mounted.

Channels 64 for the passage of air are provided between the solar cell 4 and the top cover 60 of the helmet top box 6.

The air passage is guaranteed above all by the inclination the vehicle takes in the stop condition due to the side stand 72.

Thus a passive cooling of the solar cell 4 is guaranteed, increasing the efficiency thereof.

It is possible to provide a photovoltaic solar cell 4 made of monocrystalline silicon, that by the above mentioned cooling has an efficiency 4-5% higher than an operating condition without cooling.

## Claims

1. Motorized vehicle with at least two wheels (50, 51)
**characterized in that**
it is provided with at least a first motor (10) and at least a second motor (11),
said first motor (10) being intended for applying torque values higher than those applicable by said second motor (11), and said second motor (11) being intended for reaching speeds higher than those reachable by said first motor (10),
there being provided sensor means (100, 110) for the operating condition of each motor (10, 11) and means (3) for controlling the starting of each motor (10, 11), which control means (3) start said first motor (10) and/or said second motor (11) on the basis of the parameters detected by said sensor means (100, 110) such to achieve a predetermined acceleration and/or speed.

2. Vehicle according to claim 1 wherein said first motor (10) and said second motor (11) are each one inserted in the hub of one of the wheels (50, 51).

3. Vehicle according to one or more of the preceding claims, wherein there are provided two wheels (50, 51), one front wheel (51) and a rear wheel (50) with respect to the forward direction, the rear wheel (50) being driven by said first motor (10) and the front wheel (51) being driven by said second motor (11).

4. Vehicle according to one or more of the preceding claims, wherein in a first phase of the movement of the vehicle, said control means (3) start only said first motor (10), and in a second movement phase they start only said second motor (11).

5. Vehicle according to claim 4, wherein between said first phase and said second phase there is provided an intermediate phase of the vehicle movement wherein said control means (3) contemporaneously start said first motor (10) and said second motor (11).

6. Vehicle according to one or more of the preceding claims, wherein said first motor (10) and/or said second motor (11) are electric motors, there being provided one or more rechargeable batteries (20, 21, 22) for supplying at least one of said electric motors (10, 11), preferably of the lithium-polymer type.

7. Vehicle according to one or more of the preceding claims, wherein there is provided a first battery (20) mounted in such a manner that it is not intended to be quickly removed, and one or more further removable batteries (21, 22).

8. Vehicle according to claim 7, wherein said first battery (20) is connected to a solar cell (4) for being recharged.

9. Vehicle according to claim 8, wherein there is provided a helmet top box (6), said solar cell (4) being provided and integrated on the top cover (60) of said helmet top box (6).

10. Vehicle according to claim 9, wherein between said solar cell (4) and said top cover (60) of said helmet top box (6) there are provided air passage channels (64).

11. Vehicle according to one or more of the preceding claims, wherein said removable batteries (21, 22) are housed into a battery holding compartment (2), which compartment (2) has an openable side wall (200), the lower side (201) of said side wall (200) being hinged to the lower wall (23) of said compartment (2) and said side wall (200) being movable from a closed condition to an open condition, in which open condition the top side (202) of said side wall (200) is spaced from the top wall (24) of the compartment (2) such that said one or more removable batteries (21, 22) can be fitted from the above.

12. Vehicle according to claim 11, wherein the inner side of said openable side wall (200) is provided with one or more slides intended to guide the one or more removable batteries (21, 22) when are fitted or removed.

13. Vehicle according to one or more of the preceding claims, wherein said control means (3) are settable by the user such to power said first motor (10) and/or said second motor (11) only with said first battery (20) and with a maximum speed equal to a value ranging from 50% to 75%, particularly equal to 60%, of the maximum speed reachable by said second motor (11).

14. Vehicle according to one or more of the preceding claims, wherein it is possible to increase the maximum reachable speed by replacing said second motor (11) with a third motor with a maximum reachable speed greater than the maximum speed reachable by said second motor (11), and by replacing the one or more removable batteries (21, 22) with one or more further removable batteries with a voltage corresponding to the operating voltage of said third motor.

15. Vehicle according to one or more of the preceding claims, wherein there are provided two removable batteries (21, 22) and wherein sensor means (200, 210, 220) are provided for the charge condition of the battery in operation, such that the control means automatically pass the power supply from the battery in operation to the further battery, when the detected charge of the battery in operation decreases under a predetermined threshold.
